# FASCICULE DE BREVET EUROPEEN

(11) **EP 3 645 944 B1**
(45) Date de publication et mention de la délivrance du brevet: **15.11.2023**
(21) Numéro de dépôt: 18732325.8
(22) Date de dépôt: 18.06.2018
(51) Int. Cl.: F23R 3/28, F23D 11/38

(54) **INJECTEUR DE CARBURANT A JET PLAT POUR UNE TURBOMACHINE D'AERONEF**
FLACHSTRAHLINJEKTOR FÜR EIN FLUGZEUGTRIEBWERK
FLAT-JET FUEL INJECTOR FOR AN AIRCRAFT TURBINE ENGINE

(30) Priorité: 27.06.2017 FR 1755888
(43) Date de publication de la demande: 06.05.2020
(73) Titulaire: Safran Helicopter Engines, 64510 Bordes (FR)
(72) Inventeur: CHANTELOUP, Denis, 77550 Moissy-Cramayel (FR); LEDERLIN, Thomas, 77550 Moissy-Cramayel (FR); MAURIES, Guillaume, 77550 Moissy-Cramayel (FR); MEILLEURAT, Simon, 77550 Moissy-Cramayel (FR)
(74) Mandataire: Gevers & Orès
(86) Numéro de dépôt international: PCT/EP2018/066043
(87) Numéro de publication internationale: WO 2019/001996

(56) Documents cités:
- EP-A1- 2 881 662
- WO-A1-2015/063733
- FR-A1- 2 996 285
- GB-A- 1 258 762
- US-A- 3 447 757
- US-A1- 2015 135 716
- US-A1- 2016 223 201

## Description

### DOMAINE TECHNIQUE

La présente invention concerne un injecteur de carburant à jet plat pour une turbomachine d'aéronef.

### ETAT DE L'ART

L'état de l'art comprend notamment les documents FR-A1 -2 971 039, FR-A1-3 013 805 et US-A-3 447 757 qui décrit un injecteur de carburant ayant les caractéristiques du préambule de la revendication 1.

Un mélange d'air comprimé et de carburant approprié est en général injecté dans une chambre de combustion de turbomachine à l'aide d'un ou plusieurs injecteurs. Les injecteurs sont par exemple fixés sur un carter et traversent des orifices d'une paroi de chambre en vue de l'éjection de carburant à l'intérieur de la chambre, sous forme d'une nappe de gouttelettes de carburant.

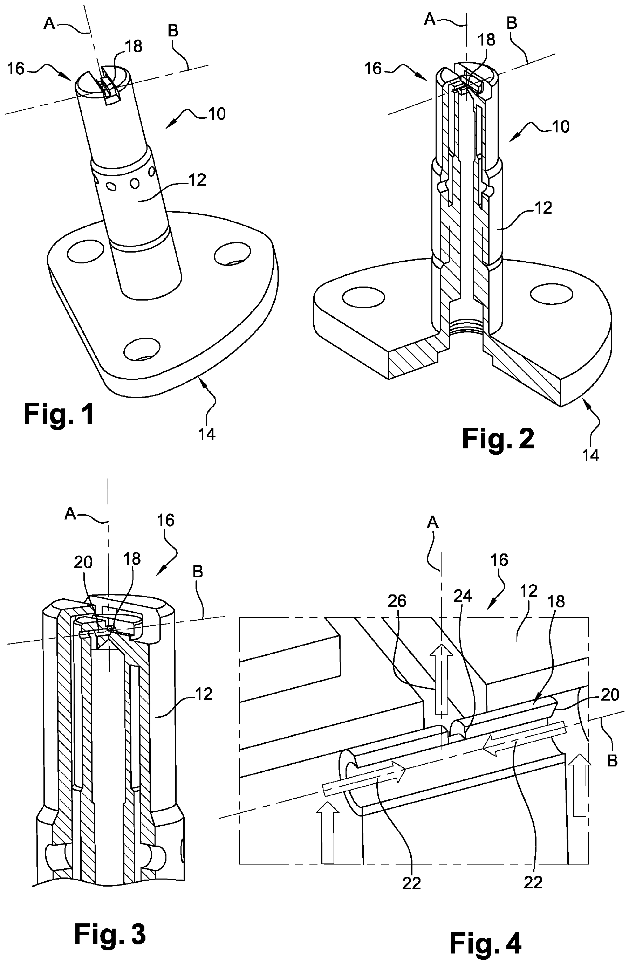

Un injecteur de carburant 10 à jet plat, tel que celui représenté aux figures 1 à 4, comprend classiquement un corps 12 de forme générale allongée présentant un axe d'allongement A. Le corps 12 comporte une première extrémité longitudinale 14 d'alimentation en carburant et une seconde extrémité longitudinale 16 d'éjection d'un jet plat de carburant. Cette seconde extrémité 16 comporte un conduit principal 18 de forme générale allongée présentant un axe d'allongement B sensiblement perpendiculairement à l'axe d'allongement A. Le conduit principal 18 a ses deux extrémités longitudinales 20 ouvertes configurées pour former respectivement deux entrées de flux de carburant distincts (flèches 22) destinés à se rencontrer sensiblement au milieu du conduit 18 qui comporte au moins une fente 24 d'éjection du jet de carburant (flèche 26).

Les caractéristiques géométriques de la nappe de gouttelettes (angle de jet, diamètre des gouttelettes, etc.) dépendent notamment de l'écoulement (vitesse, débit et écoulements secondaires) du carburant dans l'injecteur juste avant son éjection. Les solutions techniques actuelles pour
guider le carburant dans l'injecteur, emploient usuellement le conduit principal 18 précité.

Dans la technique actuelle, ce conduit principal 18 est formé par un micro-tube rapporté et fixé dans le corps 12. L'intégration du micro tube dans le corps de l'injecteur comprend de nombreuses étapes et est complexe. En effet, le volume dans lequel est intégré le micro-tube est petit et difficilement accessible, du fait notamment de la présence d'un système d'air de purge autour de l'écoulement de carburant à l'intérieur de l'injecteur. L'assemblage du micro-tube est ainsi techniquement délicat et coûteux.

L'art antérieur comprend les documents GB-A-1258762, US-A1-2016/223201, FR-A1-2996285, EP-A1-2881662, US-A1-2015/135716 et WO-A1-2015/063733.

### EXPOSE DE L'INVENTION

La présente invention propose un perfectionnement à la technologie décrite ci-dessus, qui représente une solution simple, efficace et économique à au moins une partie des problèmes évoqués ci-dessus.

L'invention propose un injecteur de carburant à jet plat pour une turbomachine d'aéronef, comprenant un corps de forme générale allongée présentant un axe d'allongement A, ledit corps comportant une première extrémité longitudinale d'alimentation en carburant et une seconde extrémité longitudinale d'éjection d'un jet plat de carburant, ladite seconde extrémité comportant un conduit principal de forme générale allongée présentant un axe d'allongement B sensiblement perpendiculaire audit axe d'allongement A, ledit conduit principal ayant ses deux extrémités longitudinales qui sont raccordées directement et respectivement à des extrémités longitudinales de deux conduits secondaires de forme générale allongée, les deux extrémités longitudinales du conduit principal étant configurées pour former respectivement deux entrées de flux de carburant distincts destinés à se rencontrer sensiblement au milieu dudit conduit principal qui
comporte au moins une fente d'éjection dudit jet de carburant, caractérisé en ce que les deux conduits secondaires présentent un axe d'allongement C au moins sensiblement parallèle audit axe d'allongement A, et en ce qu'au moins un desdits conduits principal et secondaires définit une section de passage dont au moins un paramètre géométrique, tel que la forme ou une dimension, varie le long dudit conduit et/ou est différent du même paramètre géométrique défini par une section de passage d'un autre desdits conduits.

L'invention permet ainsi d'autoriser une évolution, c'est-à-dire des variations dans les sections de passage entre les conduits secondaires et le conduit principal, ainsi que des évolutions à l'intérieur même des conduits principal et secondaires. Cette géométrie évolutive des sections de passage permet d'influencer l'écoulement du carburant dans le corps de l'injecteur, afin de piloter les caractéristiques de la nappe de carburant en sortie de l'injecteur.

L'injecteur selon l'invention peut comprendre une ou plusieurs des caractéristiques ci-dessous, prises isolément les unes des autres ou en combinaison les unes avec les autres :
- la section de passage dudit conduit principal a une forme elliptique, ovale, ou ovoïde ; ceci permet d'améliorer la fabricabilité en fabrication additive en évitant les effondrements du conduit principal au cours de cette fabrication ;
- ledit conduit principal est en partie en saillie à ladite seconde extrémité dudit corps ; ceci permet de générer une perturbation dans le jet de carburant, dès sa création ;
- ladite fente est située au fond d'une cuvette de ladite seconde extrémité dudit corps ; ceci permet d'optimiser l'influence de l'air, pouvant sortir de l'injecteur, sur la génération du jet de carburant ;
- ledit corps et lesdits conduits principal et secondaires sont formés d'une seule pièce, par exemple en métal ; la fabrication de l'injecteur est ainsi simplifiée puisqu'il n'est plus nécessaire de rapporter et fixer la partie tubulaire telle qu'un micro-tube dans le corps de l'injecteur ; l'injecteur peut ainsi être du type monobloc et ne pas nécessiter de pièces rapportées ; la fabrication de l'injecteur est donc très simplifiée par rapport à la technique antérieure et au moins certains des inconvénients décrits plus haut sont supprimés (réduction du coût de production ou d'achat, gain au niveau de l'assemblage/usinage, etc.).
- ladite première extrémité longitudinale dudit corps est reliée à une base de fixation qui est formée d'une seule pièce avec ledit corps ; l'injecteur est ainsi moins cher à fabriquer puisqu'il n'est pas nécessaire de rapporter une base de fixation au corps de l'injecteur, ce qui représente un gain en termes d'assemblage et de positionnement des pièces de l'injecteur ;
- ledit corps comprend au moins un canal longitudinal interne de passage d'air, s'étendant jusqu'à ladite seconde extrémité longitudinale et débouchant au niveau de ladite extrémité ; cela permet d'alimenter en air l'extrémité de l'injecteur afin par exemple de mieux maîtriser l'angle du jet ;
- ledit au moins un canal de passage d'air est en communication fluidique avec une rangée annulaire d'orifices d'alimentation en air formés à la périphérie du corps et s'étendant autour dudit axe d'allongement A ; ces orifices forment une entrée du circuit d'air de l'injecteur, dont la sortie est de préférence située à l'extrémité supérieure de l'injecteur, comme expliqué dans ce qui précède ; en variante, ledit au moins un canal de passage d'air est en communication fluidique avec une fenêtre d'alimentation en air formée dans le corps, par exemple orientée face au compresseur de la turbomachine afin de gaver l'injecteur en air ;
- le conduit principal a un diamètre interne compris en 0,4 mm et 0,8 mm ; naturellement, dans le cas d'un conduit de section non circulaire, cette plage représente une plage pour une section équivalente à un diamètre ; ces valeurs permettent d'optimiser l'accélération du fluide en sortie de l'injecteur ;
- la fente d'éjection a une épaisseur ou dimension le long de l'axe B, qui est compris entre 0,1 mm et 0,5 mm ; ceci permet un meilleur calibrage du débit et de la forme du jet.

La présente invention concerne encore une turbomachine d'aéronef, comportant une chambre de combustion dont une paroi est traversée par un injecteur tel que décrit ci-dessus.

La présente invention concerne également un procédé de fabrication d'un injecteur de carburant à jet plat tel que décrit ci-dessus, par une technique de fabrication additive, par exemple par fusion laser sur lits de poudre.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un injecteur de carburant à jet plat pour une turbomachine d'aéronef,
- la figure 2 est une autre vue schématique en perspective et en coupe de l'injecteur de la figure 1,
- la figure 3 est une vue à plus grande échelle d'un détail de la figure 2,
- la figure 4 est une vue à plus grande échelle encore d'un détail de l'injecteur de la figure 1,
- la figure 5 est une vue schématique partielle en coupe axiale d'une chambre de combustion de turbomachine d'aéronef,
- les figures 6a à 6d sont des vues schématiques en perspective et certaines en coupe ou en transparence d'une partie d'un injecteur de carburant à jet plat pour une turbomachine d'aéronef selon l'invention,
- les figures 7a à 24c sont des vues similaires à celles des figures 6a à 6d et illustrent plusieurs variantes de réalisation d'une partie d'un injecteur de carburant à jet plat pour une turbomachine d'aéronef selon l'invention,
- les figures 24d et 24e sont des vues schématiques à plus grande échelle de détails de la variante de réalisation des figures 24a à 24c.

### DESCRIPTION DETAILLEE

Les figures 1 à 4 ont été décrites dans ce qui précède mais peuvent servir à mieux comprendre l'invention naturellement.

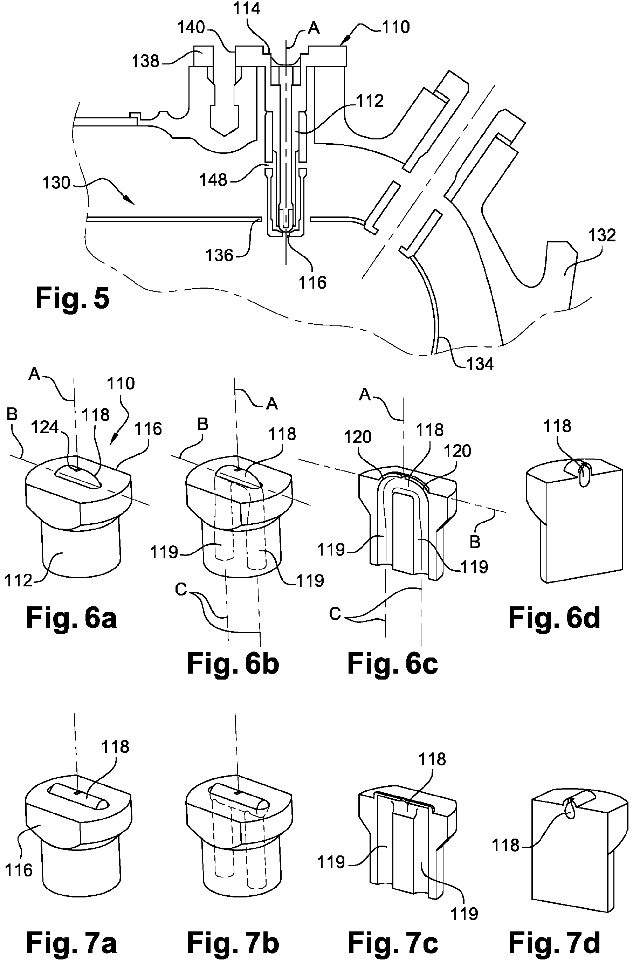

La figure 5 montre un environnement dans lequel un injecteur de carburant 110 à jet plat peut être utilisé. Il s'agit ici d'un module de combustion d'une turbomachine d'aéronef tel qu'un hélicoptère, ce module comportant une chambre de combustion 130.

La chambre de combustion 130 est disposée à l'intérieur d'un carter 132 de la turbomachine et comprend une paroi 134 définissant intérieurement un espace de combustion dans lequel est injecté et brûlé un mélange d'air et de carburant.

Le carburant est injecté dans la chambre 130 par l'intermédiaire d'un ou plusieurs injecteurs 110 qui sont ici fixés sur le carter 132 et qui traversent un orifice 136 de la paroi 134.

Le ou chaque injecteur 110 est du type de celui représenté à la figure 1 et décrit dans ce qui précède.

Les figures 6a à 24e représentent plusieurs variantes de réalisation de l'injecteur 110. L'injecteur 110 comprend un corps 112 de forme générale allongée présentant un axe d'allongement A, ce corps 112 comportant une première extrémité longitudinale 114 d'alimentation en carburant et une seconde extrémité longitudinale 116 d'éjection d'un jet plat de carburant. Cette seconde extrémité 116 comporte un conduit principal 118 de forme générale allongée présentant un axe d'allongement B sensiblement perpendiculaire à l'axe d'allongement A. Le conduit principal 118 a ses deux extrémités longitudinales ouvertes 120 configurées pour former respectivement deux entrées de flux de carburant distincts destinés à se rencontrer sensiblement au milieu du conduit principal 118 qui comporte au moins une fente 124 d'éjection du jet de carburant.

Selon l'invention, le conduit principal 118 a ses deux extrémités longitudinales 120 qui sont raccordées directement et respectivement à des extrémités longitudinales de deux conduits secondaires 119 de forme générale allongée présentant un axe d'allongement C au moins en partie sensiblement parallèle audit axe d'allongement A. Le conduit principal 118 définit une section de passage dont au moins un paramètre géométrique tel que la forme ou une dimension est différent du même paramètre géométrique défini par une section de passage de chacun desdits conduits secondaires 119. Au moins un paramètre géométrique de chaque conduit 118, 119 peut en outre varier le long de sa dimension longitudinale.

Le fait de pouvoir réaliser les conduits internes 118, 119 du circuit carburant avec des géométries évolutives permet:
- d'accélérer ou ralentir le carburant dans les zones souhaitées,
- d'influer sur les écoulements secondaires internes,
- de modifier les pertes de charges dans les zones souhaitées,
- de réduire la sensibilité à la cokéfaction (restriction de section uniquement à l'endroit ou la vitesse d'écoulement doit être élevée).

Cette solution permet aussi de modifier les états de surface des conduits internes avec par exemple l'ajout éventuel de perturbateurs dans les conduits. Les conduits secondaires pourraient également avoir une géométrie en vis ou hélicoïdale pour imposer une rotation au carburant dans les conduits.

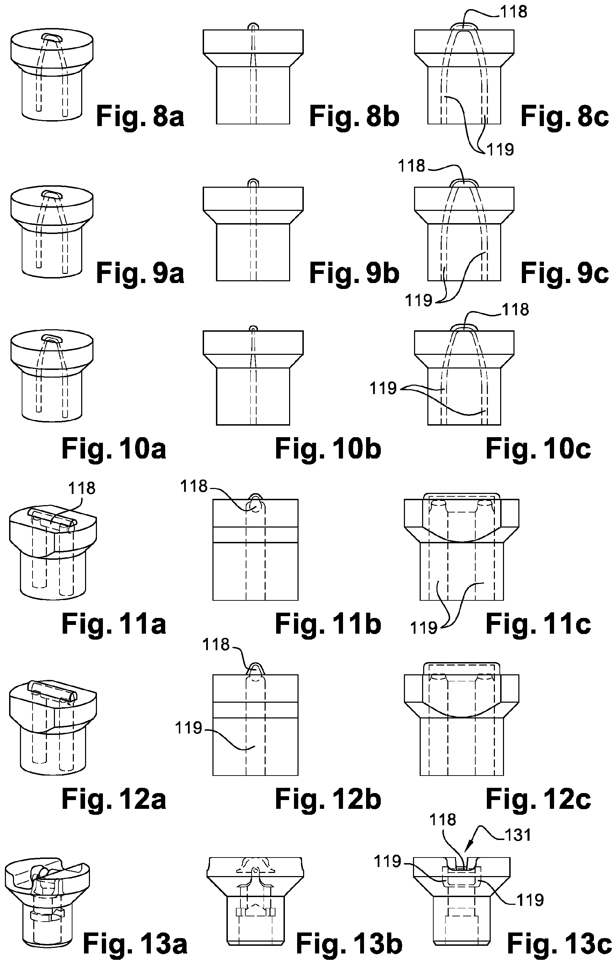

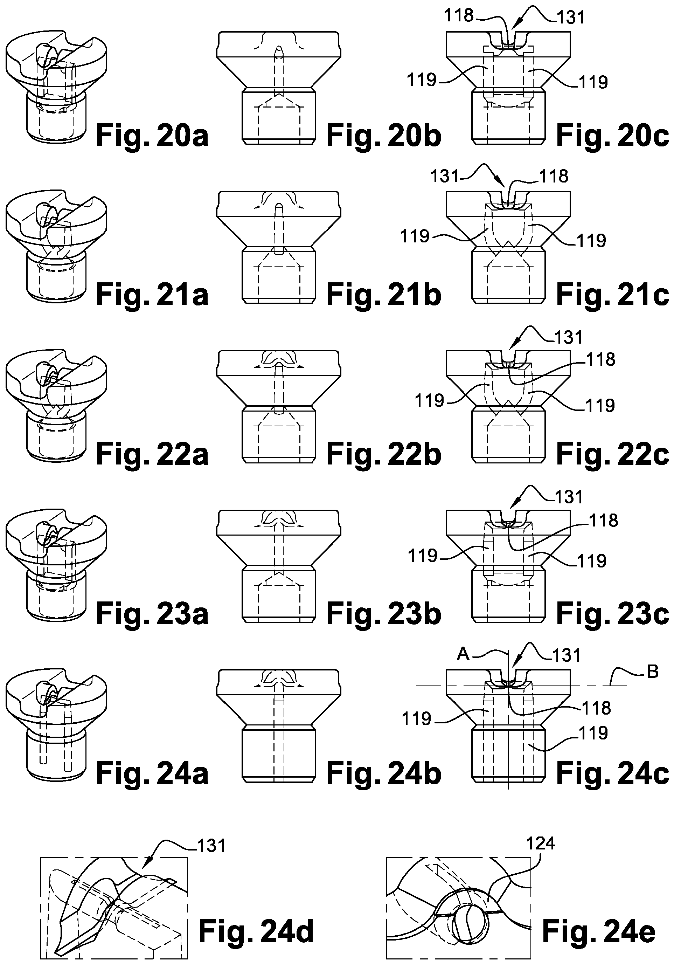

Les figures 6a et suivantes illustrent de nombreuses variantes de réalisation de l'invention, dans lequel la section de passage du conduit principal 118 a une forme elliptique ou ovale (figures 6a-6d), circulaire ou semi-circulaire (figures 13a-13c, 20a-20c, 22a-22c, 23a-23c, 24a-24c), triangulaire ou trapézoïdale (figures 21a-21c), ou ovoïde (figures 7a-7d, 11a-12c, 17a-18c).

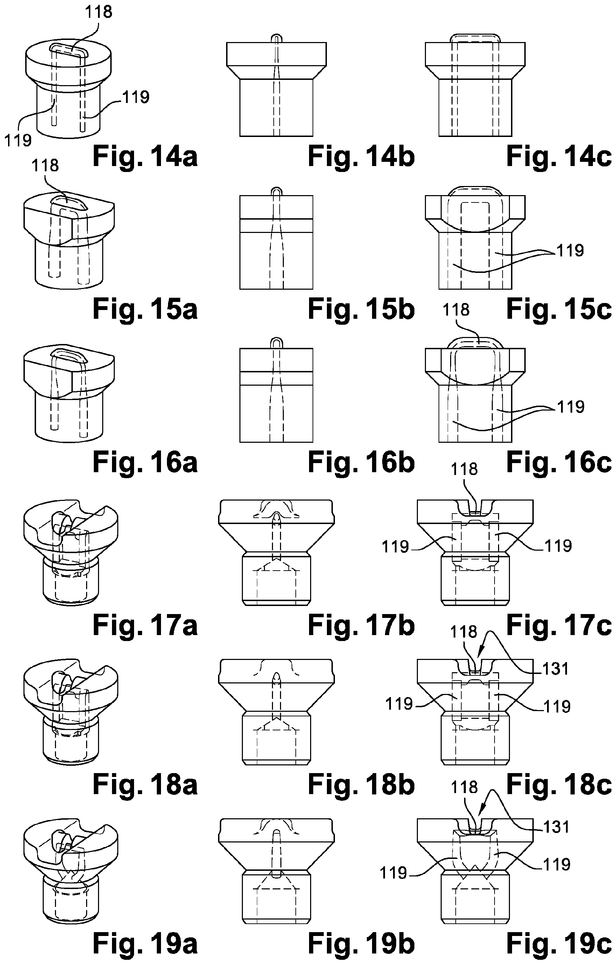

Dans le cas des figures 6a à 6d, chaque conduit 119 a une section évolutive. Il a une forme ronde en section à son extrémité inférieure et une forme oblongue en section à son extrémité supérieure reliée au conduit 118, qui a lui-même une section oblongue sensiblement constante. Dans un exemple particulier de réalisation de l'invention, le diamètre de la section ronde de chaque conduit 119 est compris entre 0,6 et 1mm et le conduit 118 a sa section oblongue qui présente une longueur sensiblement égale à ce diamètre et une largeur sensiblement égale à ce diamètre divisé par un facteur compris entre 1,5 et 2. C'est également le cas pour les variantes des figures 14a-14c et 15a-15c.

Dans le cas des figures 7a à 7d, chaque conduit 119 a une section ronde sensiblement constante et le conduit 118 a une forme ovoïde sensiblement constante. Dans un exemple particulier de réalisation de l'invention, le diamètre de chaque conduit 119 est compris entre 0,8 et 1mm et le rapport entre la surface de la section du conduit 119 et la surface de la section du conduit 118 est compris entre 1,5 et 2. C'est également le cas pour les variantes des figures 11a-11c et 12a-12c.

Dans le cas des figures 8a à 8c, chaque conduit 119 a une forme générale courbée évoluant d'une section ronde vers une section oblongue au voisinage du conduit 118. Le conduit 118 a une section oblongue sensiblement constante et le conduit 118 a une forme ovoïde sensiblement constante. Dans un exemple particulier de réalisation de l'invention, le diamètre de chaque conduit 119 est de 0,4mm environ et le conduit 118 a sa section oblongue qui présente une longueur sensiblement égale à ce diamètre et une largeur sensiblement égale à ce diamètre divisé par un facteur compris entre 1,5 et 2.

Dans le cas des figures 9a à 9c, chaque conduit 119 a une forme générale courbée avec une section ronde sensiblement constante. Le conduit 118 a une section ronde sensiblement constante. Dans un exemple particulier de réalisation de l'invention, le diamètre des conduits 118, 119 est de 0,4mm environ.

Dans le cas des figures 10a à 10c, chaque conduit 119 a une forme générale courbée avec une réduction progressive de la section ronde au voisinage du conduit 118. Le conduit 118 a une section ronde sensiblement constante. Dans un exemple particulier de réalisation de l'invention, le diamètre maximal de chaque conduit 119 est compris entre 0,5 et 1mm et le conduit 118 a un diamètre sensiblement égal à ce diamètre maximal divisé par un facteur compris entre 1,5 et 3.

Dans le cas des figures 13a à 13c, chaque conduit 119 présente une réduction progressive de sa section rectangulaire jusqu'au niveau du conduit 118, qui a une section ronde sensiblement constante. Dans un exemple particulier de réalisation de l'invention, le diamètre du conduit 118 est de l'ordre de 0,4mm.

Dans le cas des figures 16a à 16c, chaque conduit 119 a une réduction progressive de sa section ronde jusqu'au voisinage du conduit 118. Le conduit 118 a une section ronde sensiblement constante. Dans un exemple particulier de réalisation de l'invention, le diamètre de chaque conduit 119 est compris entre 0,7 et 1mm et le conduit 118 a un diamètre égal au diamètre maximal du conduit 118 divisé par un facteur compris entre 1,5 et 2.

Dans le cas des figures 17a à 17c, chaque conduit 119 a une section rectangulaire sensiblement constante. Le conduit 118 présente une section ovoïde de forme évolutive avec une réduction au niveau de la fente. Dans un exemple particulier de réalisation de l'invention, le rapport entre la surface de la section de chaque conduit 119 et la surface de la section du conduit 118, juste au niveau de sa liaison avec le conduit 119, est de l'ordre de 1,15. Le rapport entre la surface de la section ovoïde du conduit 118, au niveau de sa liaison avec le conduit 119, et la surface de la section du conduit 118, au niveau de la fente, est de l'ordre de 2,5. C'est le cas également pour la variante des figures 18a-18c.

Dans le cas des figures 19a à 19c, chaque conduit 119 a une section circulaire présentant une réduction jusqu'au conduit 118. Le conduit 118 présente également une section circulaire de forme évolutive avec une réduction au niveau de la fente. Dans un exemple particulier de réalisation de l'invention, le diamètre de chaque conduit 119 est compris entre 0,5 et 0,8mm et le diamètre du conduit 118 est compris entre 0,35 et 0,5mm.

Dans le cas des figures 20a à 20c, chaque conduit 119 a une section rectangulaire sensiblement constante. Le conduit 118 présente une section ovoïde de forme évolutive avec une section circulaire au niveau de la fente. Dans un exemple particulier de réalisation de l'invention, le rapport entre la surface de la section de chaque conduit 119 et la surface de la section du conduit 118, juste au niveau de sa liaison avec le conduit 119, est de l'ordre de 1,15. Le rapport entre les surfaces des sections maximale et minimale du conduit 118 est de l'ordre de 5, le plus petit diamètre du conduit 118 étant 0,4mm environ.

Dans le cas des figures 21a à 21c, chaque conduit 119 a une section circulaire de forme évolutive avec une réduction au niveau du conduit 118. Le conduit 118 présente une section carrée sensiblement constante. Dans un exemple particulier de réalisation de l'invention, le diamètre du conduit 119 évolue entre 0,5 et 0,8mm. Le conduit 118 a une section carrée de 0,4mm de côté.

Dans le cas des figures 22a à 22c, chaque conduit 119 a une section circulaire de forme évolutive avec une réduction au niveau du conduit 118. Le conduit 118 présente une section en demi-lune avec une réduction de la section au niveau de la fente. Une paroi centrale verticale est prévue dans le conduit 118 et le divise en deux demi-tronçons. Cette paroi n'est pas visible dans les dessins et sera mieux décrite en référence au dernier mode de réalisation. C'est également le cas des variantes des figures 23a-23c et 24a-24c.

Le conduit principal 118 peut être en partie en saillie à ladite seconde extrémité du corps 112. C'est le cas des variantes des figures 6a à 12c, 14a à 16c, etc. Dans la variante des figures 12a-12c, le conduit 118 est davantage en saillie que celui de la variante des figures 11a-11c.

En variante, la fente 124 est située au fond d'une cuvette 131 de la seconde extrémité 116 du corps 111. C'est le cas des exemples des figures 13a-13c et 17a à 24e.

Le conduit principal 118 peut être divisé en deux parties de section sensiblement semi-circulaire ou en demi-lune, par une paroi transversale s'étendant le long de l'axe B et dans un plan parallèle à l'axe A (cf. figures 24a à 24e). Les sections en demi-lune des moitiés de conduit 118 peuvent elles-mêmes être évolutives. La paroi transversale permet notamment de limiter le risque d'effondrement de la matière lors de la fabrication additive de l'injecteur. La paroi a par exemple une épaisseur de l'ordre de 0,12mm.

Le corps 112 et les conduits principal 118 et secondaires 119 sont de préférence formés d'une seule pièce, par exemple en métal.

Bien que cela ne soit pas visible dans ces variantes, comme c'est le cas de l'injecteur de la figure 1, la première extrémité longitudinale 114 du corps 112 est reliée à une base de fixation 138 qui est formée d'une seule pièce avec le corps (figure 5). Cette base 138 peut comprendre des orifices 140 de passage de moyens de fixation, tels que des vis, au carter 132.

Le corps de l'injecteur peut en outre comprendre au moins un canal longitudinal interne de passage d'air, s'étendant jusqu'à la seconde extrémité longitudinale 116 et débouchant au niveau de cette extrémité. Ce canal de passage d'air est en communication fluidique avec une rangée annulaire d'orifices 148 d'alimentation en air formés à la périphérie du corps 112 et s'étendant autour de l'axe d'allongement A (figure 5). En variante, les orifices pourraient être remplacés par une unique fenêtre située en face du compresseur de la turbomachine.

Comme évoqué dans ce qui précède, le fait de pouvoir réaliser les conduits internes du circuit carburant avec des géométries évolutives permet de piloter finement les performances en pulvérisation de l'injecteur, et par là-même ses performances d'allumage/soufflage, d'accélérer ou ralentir le carburant dans les zones souhaitées, d'influer sur les écoulements secondaires internes, de modifier les pertes de charge dans les zones souhaitées, et de réduire la sensibilité à la cokéfaction (restriction de section uniquement à l'endroit ou la vitesse d'écoulement doit être élevée).

Cette avancée est rendue possible aujourd'hui par exemple par la disponibilité du procédé de fabrication additive par fusion laser sur lits de poudre.

La fabrication additive permet d'augmenter la fabricabilité de l'injecteur, de simplifier la conception, le coût de fabrication, la robustesse fonctionnelle des injecteurs à jet plat, de réduire la sensibilité à la profondeur d'usinage de la fente, et de supprimer des opérations d'assemblage (brasage, soudage).

## Revendications

1. Injecteur de carburant (110) à jet plat pour une turbomachine d'aéronef, comprenant un corps (112) de forme générale allongée présentant un axe d'allongement A, ledit corps comportant une première extrémité longitudinale (114) d'alimentation en carburant et une seconde extrémité longitudinale (116) d'éjection d'un jet plat de carburant, ladite seconde extrémité comportant un conduit principal (118) de forme générale allongée présentant un axe d'allongement B sensiblement perpendiculaire audit axe d'allongement A, ledit conduit principal ayant ses deux extrémités longitudinales (120) qui sont raccordées directement et respectivement à des extrémités longitudinales de deux conduits secondaires (119) de forme générale allongée, les deux extrémités longitudinales (120) du conduit principal étant configurées pour former respectivement deux entrées de flux de carburant distincts destinés à se rencontrer sensiblement au milieu dudit conduit principal qui comporte au moins une fente (124) d'éjection dudit jet de carburant, **caractérisé en ce que** les deux conduits secondaires (119) présentent un axe d'allongement C au moins sensiblement parallèle audit axe d'allongement A, et **en ce qu'**au moins un desdits conduits principal et secondaires définit une section de passage dont au moins un paramètre géométrique, tel que la forme ou une dimension, varie le long dudit conduit et/ou est différent du même paramètre géométrique défini par une section de passage d'un autre desdits conduits.

2. Injecteur (110) selon la revendication précédente, dans lequel la section de passage dudit conduit principal (118) a une forme elliptique, circulaire, triangulaire, trapézoïdale, ovale, ou ovoïde.

3. Injecteur (110) selon l'une des revendications précédentes, dans lequel ledit conduit principal (118) est en partie en saillie à ladite seconde extrémité (116) dudit corps (112).

4. Injecteur (110) selon l'une des revendications 1 à 3, dans lequel ladite fente (124) est située au fond d'une cuvette (131) de ladite seconde extrémité (116) dudit corps (112).

5. Injecteur (110) selon l'une des revendications précédentes, dans lequel ledit corps (112) et lesdits condits principal (118) et secondaires (119) sont formés d'une seule pièce, par exemple en métal.

6. Injecteur (110) selon l'une des revendications précédentes, dans lequel ladite première extrémité longitudinale (114) dudit corps (112) est reliée à une base de fixation (138) qui est formée d'une seule pièce avec ledit corps.

7. Injecteur (110) selon l'une des revendications précédentes, dans lequel ledit corps (112) comprend au moins un canal longitudinal interne de passage d'air, s'étendant jusqu'à ladite seconde extrémité longitudinale (116) et débouchant au niveau de ladite extrémité.

8. Injecteur (110) selon la revendication précédente, dans lequel ledit au moins un canal de passage d'air est en communication fluidique avec une rangée annulaire d'orifices (148) d'alimentation en air formés à la périphérie du corps (112) et s'étendant autour dudit axe d'allongement A.

9. Injecteur (110) selon la revendication 7, dans lequel ledit au moins un canal de passage d'air est en communication fluidique avec une fenêtre d'alimentation en air formée dans le corps (112).

10. Turbomachine d'aéronef, comportant une chambre de combustion (130) dont une paroi (132) est traversée par un injecteur (110) selon l'une des revendications précédentes.

## Patentansprüche

1. Flachstrahlkraftstoffinjektor (110) für ein Turbostrahltriebwerk eines Luftfahrzeugs, umfassend einen Körper (112) in einer allgemeinen länglichen Form, der eine Ausdehnungsachse A aufweist, wobei der Körper ein erstes Längsende (114) zur Kraftstoffversorgung und ein zweites Längsende (116) zum Ausstoßen eines Flachstrahls an Kraftstoff umfasst, wobei das zweite Ende eine Hauptleitung (118) in einer allgemeinen länglichen Form umfasst, die eine Ausdehnungsachse B im Wesentlichen senkrecht zur Ausdehnungsachse A aufweist, wobei die Hauptleitung ihre beiden Längsenden (120) aufweist, die direkt und jeweils an Längsenden von zwei Sekundärleitungen (119) in einer allgemeinen länglichen Form angeschlossen sind, wobei die beiden Längsenden (120) der Hauptleitung konfiguriert sind, um jeweils zwei unterschiedliche Kraftstoffstromeingänge zu bilden, die dazu bestimmt sind, sich im Wesentlichen in der Mitte der Hauptleitung zu treffen, die mindestens einen Schlitz (124) zum Ausstoßen des Kraftstoffstrahls umfasst, **dadurch gekennzeichnet, dass** die beiden Sekundärleitungen (119) eine Ausdehnungsachse C mindestens im Wesentlichen parallel zur Ausdehnungsachse A aufweisen, und dadurch, dass mindestens eine von der Hauptleitung und der Sekundärleitung einen Durchgangsquerschnitt definiert, von dem mindestens ein geometrischer Parameter, wie die Form oder eine Abmessung entlang der Leitung variiert, und/oder sich von demselben geometrischen Parameter unterscheidet, der durch einen Durchgangsquerschnitt einer anderen der Leitungen definiert wird.

2. Injektor (110) nach dem vorstehenden Anspruch, wobei der Durchgangsquerschnitt der Hauptleitung (118) eine elliptische, kreisförmige, dreieckige, trapezförmige, ovale, oder eiförmige Form aufweist.

3. Injektor (110) nach einem der vorstehenden Ansprüche, wobei die Hauptleitung (118) teilweise aus dem zweiten Ende (116) des Körpers (112) hervorsteht.

4. Injektor (110) nach einem der Ansprüche 1 bis 3, wobei sich der Schlitz (124) am Boden einer Senke (131) des zweiten Endes (116) des Körpers (112) befindet.

5. Injektor (110) nach einem der vorstehenden Ansprüche, wobei der Körper (112) und die Hauptleitung (118) und Sekundärleitung (119) in einem einzigen Stück, beispielsweise aus Metall gebildet sind.

6. Injektor (110) nach einem der vorstehenden Ansprüche, wobei das erste Längsende (114) des Körpers (112) mit einer Befestigungsbasis (138) verbunden ist, die in einem Stück mit dem Körper gebildet wird.

7. Injektor (110) nach einem der vorstehenden Ansprüche, wobei der Körper (112) mindestens einen inneren Luftdurchgangslängskanal umfasst, der sich bis zum zweiten Längsende (116) erstreckt, und im Bereich des Endes einmündet.

8. Injektor (110) nach dem vorstehenden Anspruch, wobei der mindestens eine Luftdurchgangskanal in strömungstechnischer Kommunikation mit einer ringförmigen Reihe an Öffnungen (148) zur Luftversorgung ist, die an der Peripherie des Körpers (112) gebildet sind, und sich um die Ausdehnungsachse A herum erstrecken.

9. Injektor (110) nach Anspruch 7, wobei der mindestens eine Luftdurchgangskanal in strömungstechnischer Kommunikation mit einem Luftversorgungsfenster ist, das in dem Körper (112) gebildet ist.

10. Turbostrahltriebwerk eines Luftfahrzeugs, das eine Verbrennungskammer (130) umfasst, deren eine Wand (132) von einem Injektor (110) nach einem der vorstehenden Ansprüche durchquert wird.

## Claims

1. A flat-jet fuel injector (110) for an aircraft turbine engine, comprising a body (112) with a generally elongated shape having an elongation axis A, said body comprising a first longitudinal end (114) for fuel supply and a second longitudinal end (116) for ejecting a fuel flat-jet, said second end comprising a main pipe (118) with a generally elongated shape having an elongation axis B substantially perpendicular to said elongation axis A, said main pipe having its two longitudinal ends (120) which are connected directly and respectively to longitudinal ends of two secondary pipes (119) with a generally elongated shape, the two longitudinal ends (120) of the main pipe being configured for forming respectively two separate fuel flow inlets intended to meet substantially in the middle of said main pipe which comprises at least one slot (124) for ejecting said fuel-jet, **characterized in that** the two secondary pipes (119) have an elongation axis C at least substantially parallel to said elongation axis A, and **in that** at least one of said main and secondary pipes defines a flow area, at least one geometric parameter of which , such as shape or dimension, varies along said pipe and/or is different from the same geometric parameter defined by a flow area of another of said pipes.

2. The injector (110) according to the preceding claim, wherein the flow area of said main pipe (118) has an elliptical, circular, triangular, trapezoidal, oval, or ovoid shape.

3. The injector (110) according to one of the preceding claims, wherein said main pipe (118) is partially protruding at said second end (116) of said body (112).

4. The injector (110) according to one of the claims 1 to 3, wherein said slot (124) is located at the bottom of a bowl (131) of said second end (116) of said body (112).

5. The injector (110) according to one of the preceding claims, wherein said body (112) and said main (118) and secondary (119) pipes are formed in one piece, for example of metal.

6. The injector (110) according to one of the preceding claims, wherein said first longitudinal end (114) of said body (112) is connected to a fixing base (138) which is formed in one piece with said body.

7. The injector (110) according to one of the preceding claims, wherein said body (112) comprises at least one internal longitudinal channel of air flow extending to said second longitudinal end (116) and opening at said end.

8. The injector (110) according to the preceding claim, wherein said at least one channel of air flow is in fluid communication with an annular row of air supply orifices (148) formed at the periphery of the body (112) and extending around said elongation axis A.

9. The injector (110) according to claim 7, wherein said at least one channel of air flow is in fluid communication with an air supply window formed in the body (112).

10. An aircraft turbine engine, comprising a combustion chamber (130) with a wall (132) traversed by an injector (110) according to any of the preceding claims.
